# EUROPÄISCHE PATENTSCHRIFT

(11) **EP 1 464 921 B1**
(45) Veröffentlichungstag und Bekanntmachung des Hinweises auf die Patenterteilung: **16.04.2008**
(21) Anmeldenummer: 04100709.7
(22) Anmeldetag: 24.02.2004
(51) Int. Cl.: G01C 21/34, G08G 1/0968

(54) **Navigationsgerät und Verfahren zur Berechnung von Fahrtrouten unter Berücksichtigung benutzungszeitabhängiger Verkehrswegebenutzungsgebühren**
Navigation device and method for calculating routes considering time-dependency of toll fees
Dispositif et procédé de navigation pour déterminer des routes en tenant compte de la dépendance du temps des droits de péage

(30) Priorität: 26.03.2003 DE 10313542
(43) Veröffentlichungstag der Anmeldung: 06.10.2004
(73) Patentinhaber: ROBERT BOSCH GMBH, 70442 Stuttgart (DE)
(72) Erfinder: Poechmueller, Werner, 31139, Hildesheim (DE)

(56) Entgegenhaltungen:
- DE-A- 19 859 078
- US-A1- 2002 143 464
- DATABASE WPI Section PQ, Week 200132 Derwent Publications Ltd., London, GB; Class P85, AN 2001-303904 XP002275091 -& JP 2001 041760 A (MAZDA KK), 16. Februar 2001 (2001-02-16)

## Beschreibung

Die Erfindung betrifft ein Navigationsendgerät zum Berechnen und Ausgeben von Fahrtrouten von mindestens einem Startpunkt zu mindestens einem Zielpunkt mit einer Eingabeeinheit zur Eingabe mindestens der Start- und Zielpunkte, einer Ortungseinheit zur Bestimmung des aktuellen Standorts, einer Navigationseinheit zur Berechnung der Fahrtrouten auf der Basis einer digitalen Karte eines Verkehrswegenetzes in Abhängigkeit von dem Standort, dem Start- und Zielpunkt, und von Verkehrswegebenutzungsgebühren, und mit einer Ausgabeeinheit zur Ausgabe der berechneten Fahrtrouten. Die Navigationseinheit ist zur Berechnung einer kostenoptimierten Fahrtroute durch Bewerten von benutzungsabhängigen Verkehrswegebenutzungsgebühren in Abhängigkeit von der Zeit der Benutzungsaufnahme ausgebildet.

Die Erfindung betrifft weiterhin ein Verfahren zur Berechnung und Ausgabe von Fahrtrouten von mindestens einem Startpunkt zu mindestens einem Zielpunkt auf der Basis einer digitalen Karte eines Verkehrswegenetzes und von Verkehrswegebenutzungsgebühren für Verkehrswegeabschnitte.

Navigationsendgeräte sind hinreichend bekannt, mittels derer Fahrtrouten hinsichtlich der Streckenlänge oder der Fahrtdauer optimiert berechnet werden. Dabei können Kriterien und Parameter eingegeben werden, um bestimmte Strecken, wie beispielsweise Autobahnen, Landstraßen, Wohngebiete und Regionen mit besonderen Verkehrsbehinderungen zu meiden. Die Optimierung erfolgt beispielsweise mit mathematischen Minimierungs- bzw. Maximierungsalgorithmen. Es ist auch bekannt, variable Gewichte einzusetzen, die in Abhängigkeit vom aktuellen Verkehrsaufkommen dynamisch beeinflussbar sind. Das Verkehrsaufkommen wird von dem Navigationsendgerät aus Verkehrsmeldungen extrahiert, die mit einem Rundfunksignal empfangen werden.

Für bestimmte Verkehrswegeabschnitte sind teilweise Verkehrswegebenutzungsgebühren zu entrichten. Diese werden insbesondere für das Befahren von aufwändigen Tunnel- und Brückenbauwerke erhoben, um die Errichtung und Instandhaltung finanzieren zu können. Verkehrswegebenutzungsgebühren werden aber auch für Autobahnen erhoben und teilweise mit dem Ziel eingesetzt, den Verkehr zur effizienteren Ausnutzung der Verkehrsinfrastruktur zu steuern. Komplexe Modelle für Verkehrswegebenutzungsgebühren sehen Benutzungsgebühren vor, die streckenbezogen, fahrzeugtypabhängig, zeitabhängig und räumlich variierend erhoben werden. Vor allem beim Befahren einer längeren Fahrtstrecke ist damit die Ermittlung der zu erwartenden Kosten sehr aufwändig.

In der DE 198 59 078 A1 wird ein Navigationsverfahren beschrieben, bei dem vorgegebene Eigenschaften von Streckenabschnitten, insbesondere eine Gebührenpflicht berücksichtigt werden, um eine Fahrtroute mit minimierter Fahrtdauer und geringstmöglichen Fahrtkosten zu berechnen. Dabei wird jedoch nur die Gebührenpflicht an sich bewertet.

JP 2001-041760 A1 offenbart ein Verfahren zur Führung eines Fahrzeugs auf kostenreduzierte Weise über eine Mautstrecke durch Berücksichtigung von Zeitzonen in denen die Maut ermäßigt ist, und von Zwischenrouten zur nur teilweise Nutzung der mautpflichtigen Strecken so, dass die preiswerteste und zeitlich kürzeste Route aufgefunden wird.

US 2002/0143464 A1 offenbart ein Verfahren zum automatischen Berechnen günstigster Routen unter Berücksichtigung unter anderem der Reisezeit der Reiseentfernung und von Mautgebühren. Die verschiedenen Startzeiten der erhaltenen Kandidatenrouten können ausgewertet werden, um den Einfluss auf die verschiedenen zeitabhängigen Kosten vorherzusagen.

Aufgabe der Erfindung ist es, ein verbessertes Navigationsendgerät zu schaffen, mit dem eine weiter aus Gebührensicht kostenoptimierte Fahrtroute ermittelt werden kann.

Die Aufgabe wird mit dem gattungsgemäßen Navigationsendgerät erfindungsgemäß dadurch gelöst, dass die Navigationseinheit zur Berechnung der kostenoptimierten Fahrtroute in Abhängigkeit von einer vorgegebenen maximalen Fahrtzeit derart ausgebildet ist, dass eine Fahrtroute aufgefunden wird, die unter Einhaltung der vorgegebenen maximalen Fahrtzeit die geringsten Benutzungsgebühren verursacht.

Die Fahrtroutenoptimierung erfolgt somit nicht nur wie herkömmlich unter Berücksichtigung der Gebührenpflicht an sich, sondern wird zusätzlich in Abhängigkeit von der Uhrzeit und ggf. dem Datum der Benutzung der gebührenpflichtigen Verkehrswegeabschnitte berechnet. Damit kann erstmals eine aus Gebührensicht kostenoptimale Fahrtroute mit kostenoptimaler Uhrzeit für den Fahrtbeginn durch Lösen eines komplexen Optimierungsalgorithmus ermittelt werden. Durch die vorgegebene zeitliche Obergrenze der Fahrtzeit wird vermieden, dass lediglich eine Kostenoptimierung durch Ausweichen auf in der Regel langsamer zu befahrende Verkehrswegeabschnitte mit geringeren oder keinen Benutzungsgebühren erfolgt. Der in der Navigationseinheit implementierte Optimierungsalgorithmus ist somit zum Auffinden derjenigen Fahrtroute ausgelegt, die unter Einhaltung der vorgegebenen Fahrtzeit die geringsten Benutzungsgebühren verursacht.

Vorzugsweise ist das Navigationsgerät mit einem Zeitgeber zum Einlesen der aktuellen Zeit und Ermitteln der Benutzungsaufnahme durch die Navigationseinheit gekoppelt. Die geplante Zeit der Benutzungsaufnahme von Verkehrswegeabschnitten mit Benutzungsgebührenpflicht oder entsprechende Zeitfenster können aber auch über eine Eingabeeinheit manuell eingegeben werden.

Vorzugsweise ist die Navigationseinheit zur Berechnung einer kostenoptimalen Fahrtantrittszeit für eine kostenoptimale Fahrtroute ausgebildet. Bei zeitlich variablen Verkehrswegebenutzungsgebühren wird auf diese Weise ein Vorschlag für eine Uhrzeit für den Fahrtantritt unterbreitet, bei dem eine Fahrtroute kostenoptimal befahren werden kann. Mit der kostenoptimierten Fahrtantrittszeit kann aber nicht nur die Fahrtroute unter Kostengesichtspunkten optimiert werden. Es können vielmehr auch Optimierungen hinsichtlich der Streckenkriterien, der Fahrtzeit oder sonstigen Kriterien erfolgen.

Besonders vorteilhaft ist es dabei, wenn die kostenoptimale Fahrtantrittszeit in Abhängigkeit von einem vorgegebenen Zeitfenster berechnet wird.

Die von der Navigationseinheit für eine ermittelte kostenoptimierte Fahrtroute berechnete fällige Verkehrswegebenutzungsgebühr kann über die Ausgabeeinheit an den Nutzer ausgegeben werden. Auf diese Weise erhält der Nutzer eine komfortable Übersicht über die zu erwartenden Fahrtkosten, die herkömmlicherweise nicht oder nur mit großem Aufwand vorherbestimmt werden können.

Vorzugsweise ist eine Datenkommunikationsschnittstelle, insbesondere eine drahtlose Luftschnittstelle, beispielsweise als Mobiltelefonverbindung zum Einlesen von digitalen Kartendaten und/oder Verkehrswegebenutzungsgebühren von einer Datenzentrale in das Navigationsendgerät vorgesehen. Auf diese Weise können die digitalen Kartendaten und insbesondere die Verkehrswegebenutzungsgebühren in dem dezentralen Navigationsendgerät jederzeit aktualisiert werden.

Die Aufgabe wird weiterhin mit dem gattungsgemäßen Verfahren gelöst durch Berechnen einer kostenoptimierten Fahrtroute durch Bewerten von benutzungszeitabhängigen Verkehrswegebenutzungsgebühren in Abhängigkeit von der Zeit der Benutzungsaufnahme von benutzungsgebührenpflichtigen Verkehrswegeabschnitten und von einer vorgegebenen maximalen Fahrtzeit derart, dass eine Fahrtroute aufgefunden wird, die unter Einhaltung der vorgegebenen maximalen Fahrtzeit die geringsten Benutzungsgebühren verursacht.

Die Erfindung wird nachfolgend anhand der beigefügten Zeichnungen näher erläutert. Es zeigen:
- Figur 1 -: Skizze eines erfindungsgemäßen Navigationsendgerätes;
- Figur 2 -: Beispiel einer Straßenkarte mit benutzungszeitabhängigen Benutzungsgebühren für Verkehrswegeabschnitte für 8:00 Uhr;
- Figur 3 -: Straßenkarte aus Figur 2 mit Benutzungsgebühren für 14:30 Uhr.

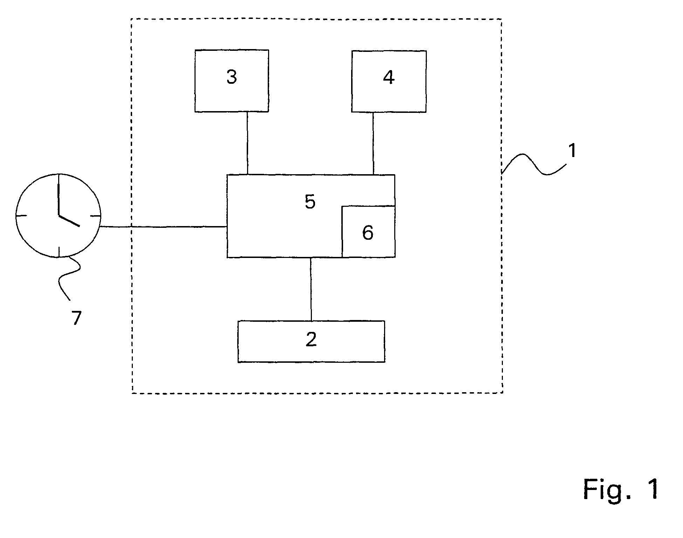

Die Figur 1 lässt ein Navigationsendgerät 1 erkennen, das beispielsweise ein separates in einem Kraftfahrzeug eingebautes Navigationsgerät oder ein Kombinationsgerät mit weiteren Funktionalitäten, wie beispielsweise ein Fahrerinformationssystem, ein mobiler Rechner mit Navigationsfunktion, ein Mobiltelefon mit Navigationsfunktion etc. ist. Das Navigationsendgerät 1 hat eine Eingabeeinheit 2, über die mindestens ein Startpunkt und mindestens ein Zielpunkt für eine zu optimierende Fahrtroute in das Navigationsendgerät 1 eingegeben werden kann.

Weiterhin ist eine Ortungseinheit 3 vorgesehen, mit der die Position des Navigationsendgerätes 1 bzw. des Fahrzeugs mit dem Navigationsendgerät 1 bestimmt werden kann. Die Ortungseinheit 3 kann beispielsweise einen GPS-Empfänger, ein Mobilfunkortungsmodul oder ähnliches haben. Weiterhin ist eine Ausgabeeinheit 4, vorzugsweise ein Display, vorgesehen, um die berechnete optimierte Fahrtroute auszugeben. Eingabeeinheit 2, Ortungseinheit 3 und Ausgabeeinheit 4 sind mit einer Navigationseinheit 5 verbunden, die beispielsweise als programmierbarer Rechner ausgeführt ist. Die Navigationseinheit 5 sollte Speicher 6 beinhalten, um eine digitale Karte mit einem Verkehrswegenetz sowie die Verkehrswegebenutzungsgebühren für Verkehrswegeabschnitte des Verkehrswegenetzes abzuspeichern und für die von der Navigationseinheit ausgeführten Optimierungsalgorithmen abrufbar zu halten.

Der Optimierungsalgorithmus der Navigationseinheit 5, mit dem eine optimale Fahrtroute von dem eingegebenen mindestens einen Startpunkt zu dem eingegebenen mindestens einen Zielpunkt berechnet wird, nimmt erfindungsgemäß eine Bewertung von benutzungszeitabhängigen Verkehrswegebenutzungsgebühren in Abhängigkeit von der Zeit der Benutzungsaufnahme vor, um eine kostenoptimierte Fahrtroute zu berechnen. Die Zeit der Benutzungsaufnahme kann beispielsweise über die Eingabeeinheit 2 durch den Benutzer vorgegeben werden. Alternativ oder zusätzlich hierzu ist das Navigationsendgerät 1 mit einem Zeitgeber 7 gekoppelt, der die aktuelle Zeit vorgibt. Dieser Zeitgeber 7 kann beispielsweise eine im Fahrzeug verfügbare Uhr sein. Aus der aktuellen Zeit wird dann von der Navigationseinheit 5 die zu erwartende Zeit der Aufnahme der Benutzung gebührenpflichtiger Verkehrswegeabschnitte ermittelt.

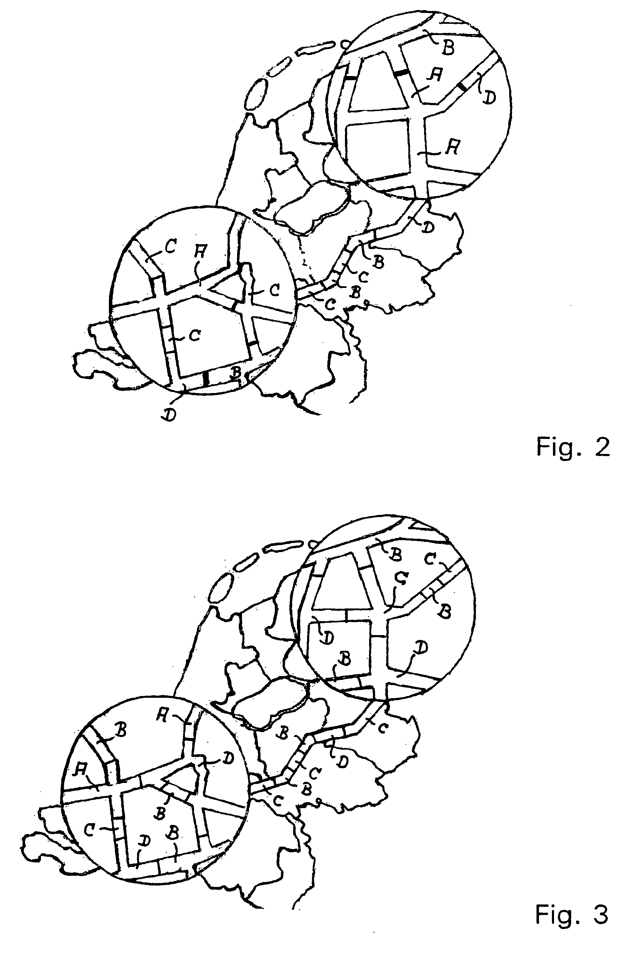

Die Figur 2 lässt am Beispiel einer Skizze einer Straßenkarte mit Verkehrswegeabschnitten 8 erkennen, die zum dargestellten Zeitpunkt 8:00 Uhr festgelegte unterschiedliche Benutzungsgebühren vorsehen. Die Benutzungsgebühren sind beispielsweise in die preisgestaffelten Gebührenarten A, B, C und D eingruppiert, wobei die Gebührenklasse A die teuerste und die Gebührenklasse D die billigste ist.

Die Figur 3 lässt im Vergleich hierzu dieselben Verkehrswegeabschnitte mit Benutzungsgebühren für den Zeitpunkt 14:30 Uhr erkennen. Es wird deutlich, dass die Benutzungsgebühren von den teureren Gebührenklassen in günstigere Gebührenklassen geändert sind. Dies ist damit begründet, dass zur Hauptverkehrszeit um 8:00 Uhr mit dem üblichen Berufsverkehr die Verkehrsströme mit Hilfe der Benutzungsgebühren gelenkt werden sollen.

Der in der Navigationseinheit 5 implementierte Optimierungsalgorithmus sieht nunmehr vor, die Fahrtroute kostenoptimiert unter Berücksichtigung der Zeit der Benutzungsaufnahme von Verkehrswegeabschnitten 6 zu berechnen. Dabei kann auch eine kostenoptimale Fahrtantrittszeit für eine kostenoptimale Fahrtroute ermittelt werden. Es wird z. B. deutlich, dass die Fahrtkosten bei einer Fahrtantrittszeit um 14:30 Uhr bei gleicher Fahrtroute im Schnitt günstiger sind, als beim Fahrantritt zur Hauptverkehrszeit um, 8:00 Uhr.

Bei der Ermittlung der optimalen Fahrtantrittszeit sollte ein vorgegebenes Zeitfenster berücksichtigt werden. Gleichermaßen sollte auch bei der Ermittlung der kostenoptimalen Fahrtroute eine vorgegebene maximale Fahrtdauer berücksichtigt werden, so dass der Optimierungsalgorithmus nicht um jeden Preis auf langsamere aber kostengünstigere Verkehrswegeabschnitte, wie beispielsweise Landstraßen und Stadtdurchfahrten ausweicht.

## Patentansprüche

1. Navigationsendgerät (1) zum Berechnen und Ausgeben von Fahrtrouten von mindestens einem Startpunkt zu mindestens einem Zielpunkt mit einer Eingabeeinheit (2) zur Eingabe mindestens der Start- und Zielpunkte, einer Ortungseinheit (3) zur Bestimmung des aktuellen Standorts, einer Navigationseinheit (5) zur Berechnung der Fahrtrouten auf der Basis einer digitalen Karte eines Verkehrswegenetzes in Abhängigkeit von dem Standort, dem Start- und dem Zielpunkt, und von Verkehrswegebenutzungsgebühren, und mit einer Ausgabeeinheit (4) zur Ausgabe der berechneten Fahrtrouten, wobei die Navigationseinheit (5) zur Berechnung einer kostenoptimierten Fahrtroute durch Bewerten von benutzungszeitabhängigen Verkehrswegebenutzungsgebühren in Abhängigkeit von der Zeit der Benutzungsaufnahme ausgebildet ist, **dadurch gekennzeichnet, dass** die Navigationseinheit (5) zur Berechnung der kostenoptimierten Fahrtroute in Abhängigkeit von einer vorgegebenen maximalen Fahrtzeit derart ausgebildet ist, dass eine Fahrtroute aufgefunden wird, die unter Einhaltung der vorgegebenen maximalen Fahrtzeit die geringsten Benutzungsgebühren verursacht.

2. Navigationsendgerät (1) nach Anspruch 1, **dadurch gekennzeichnet, dass** das Navigationsendgerät (1) mit einem Zeitgeber (7) zum Einlesen der aktuellen Zeit und Ermitteln der Benutzungsaufnahme durch die Navigationseinheit (5) gekoppelt ist.

3. Navigationsendgerät (1) nach Anspruch 1 oder 2, **dadurch gekennzeichnet, dass** die Eingabeeinheit (2) weiterhin zur Eingabe der Zeit der Benutzungsaufnahme von Verkehrswegeabschnitten mit Benutzungsgebührenpflicht vorgesehen ist.

4. Navigationsendgerät (1) nach einem der vorhergehenden Ansprüche, **dadurch gekennzeichnet, dass** die Navigationseinheit (5) zur Berechnung einer kostenoptimalen Fahrtantrittszeit für eine kostenoptimale Fahrtroute ausgebildet ist.

5. Navigationsendgerät (1) nach Anspruch 4, **dadurch gekennzeichnet, dass** die Navigationseinheit (5) zur Berechnung der kostenoptimalen Fahrtantrittszeit in Abhängigkeit von einem vorgegebenen Zeitfenster ausgebildet ist.

6. Navigationsendgerät (1) nach einem der vorhergehenden Ansprüche, **dadurch gekennzeichnet, dass** die von der Navigationseinheit (5) für eine ermittelte kostenoptimierte Fahrtroute berechnete fällige Verkehrswegebenutzungsgebühr über die Ausgabeeinheit (4) ausgebbar ist.

7. Navigationsendgerät (1) nach einem der vorhergehenden Ansprüche, **gekennzeichnet durch** eine Datenkommunikationsschnittstelle, insbesondere einer drahtlosen Luftschnittstelle zum Einlesen von digitalen Kartendaten und/oder Verkehrswegebenutzungsgebühren von einer Datenzentrale in das Navigationsendgerät (1).

8. Verfahren zur Berechnung und Ausgabe von Fahrtrouten von mindestens einem Startpunkt zu mindestens einem Zielpunkt auf der Basis einer digitalen Karte eines Verkehrswegenetzes und von Verkehrswegebenutzungsgebühren für Verkehrswegeabschnitte, **gekennzeichnet durch** Berechnen einer kostenoptimierten Fahrtroute **durch** Bewerten von benutzungszeitabhängigen Verkehrswegebenutzungsgebühren in Abhängigkeit von der Zeit der Benutzungsaufnahme von benutzungsgebührenpflichtigen Verkehrswegeabschnitten und von einer vorgegebenen maximalen Fahrtzeit derart, dass eine Fahrtroute aufgefunden wird, die unter Einhaltung der vorgegebenen maximalen Fahrtzeit die geringsten Benutzungsgebühren verursacht.

## Claims

1. Navigation terminal (1) for calculating and outputting journey routes from at least one starting point to at least one destination with an input unit (2) for inputting at least the starting point and destination, a position-finding unit (3) for determining the current location, a navigation unit (5) for calculating the journey routes on the basis of a digital map of a traffic route network as a function of the location, the starting point and the destination, and traffic route use charges, and with an output unit (4) for outputting the calculated journey routes, wherein the navigation unit (5) is designed to calculate an optimized-cost journey route by rating use-time-dependent traffic route use charges as a function of the time at which use commences, **characterized in that** the navigation unit (5) is designed to calculate the optimized-cost journey route as a function of a prescribed maximum journey time such that a journey route is found which gives rise to the lowest use charges while observing the prescribed maximum journey time.

2. Navigation terminal (1) according to Claim 1, **characterized in that** the navigation terminal (1) is coupled to a timer (7) for reading in the current time and ascertaining when use commences by the navigation unit (5).

3. Navigation terminal (1) according to Claim 1 or 2, **characterized in that** the input unit (2) is also provided for inputting the time at which use commences for traffic route sections for which a use charge is due.

4. Navigation terminal (1) according to one of the preceding claims, **characterized in that** the navigation unit (5) is designed to calculate an optimum-cost journey start time for an optimum-cost journey route.

5. Navigation terminal (1) according to Claim 4, **characterized in that** the navigation unit (5) is designed to calculate the optimum-cost journey start time as a function of a prescribed time window.

6. Navigation terminal (1) according to one of the preceding claims, **characterized in that** the traffic route use charge due which is calculated by the navigation unit (5) for an ascertained optimized-cost journey route can be output via the output unit (4).

7. Navigation terminal (1) according to one of the preceding claims, **characterized by** a data communication interface, particularly a wireless air interface, for reading digital map data and/or traffic route use charges from a data control centre into the navigation terminal (1).

8. Method for calculating and outputting journey routes from at least one starting point to at least one destination on the basis of a digital map of a traffic route network and traffic route use charges for traffic route sections, **characterized by** calculation of an optimized-cost journey route by rating use-time-dependent traffic route use charges as a function of the time at which use commences for traffic route sections for which a use charge is due and a prescribed maximum journey time such that a journey route is found which gives rise to the lowest use charges while observing the prescribed maximum journey time.

## Revendications

1. Terminal de navigation (1) pour calculer et émettre des trajets entre au moins un point de départ et au moins un point de destination comprenant une unité d'entrée (2) pour introduire au moins un point de départ et un point de destination, une unité de localisation (3) pour déterminer l'emplacement actuel, une unité de navigation (5) pour calculer les trajets fondés sur une carte numérique d'un réseau routier selon l'emplacement, le point de départ et le point de destination et des péages ainsi qu'une unité d'émission (4) pour émettre les trajets calculés,
l'unité de navigation (5) étant réalisée pour calculer un trajet optimisé du point de vue du coût en exploitant les péages dépendant du temps d'utilisation en fonction du temps de prise en charge d'utilisation,
**caractérisé en ce que**
l'unité de navigation (5) est réalisée pour calculer le trajet optimisé quant au coût, en fonction d'une durée maximale de trajet, prédéfinie, et le trajet résultant respectant la durée maximale prédéterminée du trajet pour le péage le plus faible.

2. Terminal de navigation (1) selon la revendication 1,
**caractérisé en ce que**
le terminal de navigation (1) est couplé à une horloge (7) pour enregistrer l'instant actuel et déterminer la mise en service par l'unité de navigation (5) .

3. Terminal de navigation (1) selon les revendications 1 ou 2,
**caractérisé en ce que**
l'unité d'entrée (2) est en outre prévue pour introduire le temps de la mise en service de segments de trajets de circulation à péage.

4. Terminal de navigation (1) selon l'une des revendications précédentes,
**caractérisé en ce que**
l'unité de navigation (5) est conçue pour calculer un temps de début de trajet optimisé du point de vue du coût pour un trajet optimum du point de vue du coût.

5. Terminal de navigation (1) selon la revendication 4,
**caractérisé en ce que**
l'unité de navigation (5) est réalisée pour calculer le temps de début de trajet au maximum du point de vue du coût en fonction d'une fenêtre de temps prédéfinie.

6. Terminal de navigation (1) selon l'une des revendications précédentes,
**caractérisé en ce que**
le péage prévisionnel calculé, par l'unité de navigation (5) pour un trajet optimisé du point de vue du coût, est présenté par l'unité d'émission (4).

7. Terminal de navigation (1) selon l'une des revendications précédentes,
**caractérisé par**
une interface de communication de données, notamment une interface aérienne sans fil pour enregistrer des données de cartes numériques et/ou des péages par une centrale de données dans le terminal de navigation (1).

8. Procédé de calcul et d'émission de trajets entre au moins un point de départ et au moins un point de destination fondés sur une carte numérique d'un réseau de circulation et des péages pour les segments de trajets,
**caractérisé par**
- le calcul d'un trajet optimisé du point de vue du coût par l'exploitation des péages dépendant des temps d'utilisation en fonction du temps de prise en charge de l'utilisateur pour des segments de circulation soumis à péage et d'un temps de trajet maximum prédéfini de façon à trouver un trajet qui, tout en respectant le temps de trajet maximum prédéfini, occasionne le péage minimum.
